# FASCICULE DE BREVET EUROPEEN

(11) **EP 1 145 450 B1**
(45) Date de publication et mention de la délivrance du brevet: **20.11.2002**
(21) Numéro de dépôt: 00900652.9
(22) Date de dépôt: 25.01.2000
(51) Int. Cl.: H04B 1/16

(54) **PROCEDE DE TRAITEMENT DE SIGNAL POUR RECEPTEUR RADIO NUMERIQUE LARGE BANDE ET ARCHITECTURE DE RECEPTION RADIO CORRESPONDANTE**
VERFAHREN ZUM SIGNALVERARBEITUNG FÜR DIGITALEN BREITBAND-FUNKEMPFÄNGER UND ENTSPRECHENDE FUNKEMPÄNGERARCHITEKTUR
PROCESSING METHOD FOR A BROADBAND DIGITAL RADIO RECEIVER SIGNAL AND CORRESPONDING RADIO RECEPTION ARCHITECTURE

(30) Priorité: 27.01.1999 FR 9901068
(43) Date de publication de la demande: 17.10.2001
(73) Titulaire: FRANCE TELECOM SA, 75015 Paris (FR); TELEDIFFUSION DE FRANCE, société anonyme, 75015 Paris (FR)
(72) Inventeur: PALICOT, Jacques, F-35000 Rennes (FR); ROLAND, Christian, F-35220 Saint Didier (FR)
(74) Mandataire: Bentz, Jean-Paul
(86) Numéro de dépôt international: FR0000152
(87) Numéro de publication internationale: WO00045521

(56) Documents cités:
- EP-A- 0 855 804
- WO-A-95/10889
- WO-A-96/21305
- WO-A-96/28946
- US-A- 5 655 003

## Description

La présente invention concerne un procédé de traitement de signal pour récepteur radio numérique large bande et une architecture de réception pour la mise en oeuvre de ce procédé. Elle trouve tout particulièrement son application dans le domaine des terminaux mobiles téléphoniques ou les récepteurs de télévision.

La multiplication des standards notamment en télécommunications et plus précisément en téléphonie cellulaire, a obligé les fabricants à concevoir des produits spécifiques pour chaque type de réseau. La tendance actuelle est désormais à la recherche d'un produit unique, l'adaptation de ce produit au réseau se faisant par logiciel.

Ainsi, la réalisation d'une radio numérique universelle capable de supporter tous les schémas de démodulation et les évolutions de protocoles les plus divers, et ce par une simple mise à jour du logiciel de traitement d'un'processeur numérique (DSP), constitue le principal objectif de la radio logicielle, communément désignée par le terme "software radio" dans la littérature anglo-saxonne. Compte tenu des améliorations techniques dans le domaine des processeurs numériques et des convertisseurs analogique/numérique, la radio logicielle vise à numériser les signaux au plus près de l'antenne et à concevoir une partie matérielle générique.

L'un des freins de l'application de cette technique est le convertisseur analogique/numérique. En effet, la meilleure solution consisterait à numériser directement les signaux à la sortie de l'antenne. Malheureusement, la technologie actuelle des convertisseurs A/N ne permet pas de travailler à des fréquences d'échantillonnage élevées avec une sensibilité et une dynamique suffisantes pour numériser directement les signaux à la sortie de l'antenne. Il existe notamment des convertisseurs A/N capables d'échantillonner à 1 Géch/s mais leur résolution se limite à 8 bits dans le meilleur des cas, ce qui est largement insuffisant pour récupérer des signaux GSM (200 KHz de largeur de canal et 90 dB de dynamique) dans une large bande de fréquences, de l'ordre d'une à plusieurs centaines de mégahertz.

Actuellement, l'unique solution pour simuler une radio logicielle et ainsi traiter tous les signaux radio dans une large bande de fréquences consiste à empiler les récepteurs numériques bande étroite. Cette solution n'est toutefois pas très satisfaisante car elle se révèle très coûteuse et ne supporte pas les évolutions des standards.

EP-A-0 855 804 décrit un récepteur radio permettant de recevoir plusieurs bandes de fréquences étroites. Un premier filtrage est réalisé par une large bande, puis une bande plus étroite est filtrée et démodulée. WO9628946 A décrit une station de base comportant des moyens pour sélectionner des signaux radio reçus dans une large bande, mais sans analyser cette bande.

US-A-5 655 003 décrit un dispositif permettant de démoduler plusieurs standards de telécommunication, là aussi sans analyse préalable d'une large bande de fréquences.

Aussi, un but de l'invention est de pallier les inconvénients de l'art antérieur cité en proposant un procédé de traitement de signal et une architecture de réception pour radio logicielle aptes à traiter tous les signaux radio, quelles que soient leur largeur de canal et leur puissance, dans une large bande de fréquences.

Un autre but de l'invention est de proposer un procédé de traitement de signal pour récepteur radio large bande permettant de faire face à la multiplication et à la constante évolution des standards de communication.

L'invention a pour objet un procédé de traitement des signaux radio d'une pluralité de standards de radiocommunication occupant une large bande de fréquences caractérisé en ce qu'il comporte les étapes suivantes :
- une étape d'analyse large bande pour acquérir des informations sur les signaux radio contenus dans ladite large bande de fréquences et sélectionner un traitement en bande étroite approprié pour la démodulation desdits signaux radio, et
- une étape de traitement en bande étroite desdits signaux radio contenus dans ladite large bande de fréquences pour les démoduler.

Dans un premier mode de réalisation, l'étape d'analyse large bande consiste à rechercher, parmi les canaux des standards de radiocommunication, les canaux renfermant des signaux radio. Dès qu'un canal renfermant un signal radio est repéré dans la partie de bande de fréquences correspondant à un standard, un traitement en bande étroite adapté à ce standard est sélectionné pour démoduler ledit signal radio.

Dans un second mode de réalisation, l'analyse large bande consiste à acquérir des informations permettant d'identifier le standard de radiocommunication associé à chacun des signaux radio contenus dans ladite large bande de fréquences. Ces informations sont par exemple la fréquence porteuse et/ou la largeur de bande de ces signaux radio. Après détermination du standard de communication des signaux radio de la bande, il est possible de sélectionner un traitement en bande étroite approprié pour la démodulation de ces signaux radio. La détermination du standard de communication des signaux radio permet en effet de discriminer les signaux radio de la bande de fréquences pouvant être démodulés directement par un processeur numérique des signaux radios nécessitant un traitement en bande étroite par filtrage analogique.

Dans le cas de signaux radio démodulables directement (se rapportant généralement à des standards de radiocommunication à faible dynamique), le traitement en bande étroite (extraction du signal et démodulation) des signaux radio est directement réalisé par un processeur numérique, de préférence celui qui a réalisé l'analyse large bande, et le procédé de traitement de signal proposé fonctionne alors comme une véritable radio logicielle.

Pour les autres signaux, on simule fonctionnellement une radio logicielle selon l'invention en isolant les signaux radio à démoduler par filtrage analogique et en réalisant ensuite la démodulation de ces signaux, après une conversion analogique/numérique, par un processeur numérique.

L'invention concerne également une architecture réception de radio logicielle apte à traiter les signaux radio d'une pluralité de standards de radiocommunication occupant une ou plusieurs larges bandes de fréquences, caractérisée en ce qu'elle comporte:
- des moyens d'analyse large bande pour acquérir des informations sur les signaux radio contenus dans ladite large bande de fréquences et sélectionner un traitement en bande étroite des desdits signaux radio en fonction des informations acquises par lesdits moyens d'analyse large bande, et
- des moyens de traitement en bande étroite pour démoduler lesdits signaux radio contenus dans ladite large bande de fréquences.

D'autres caractéristiques et avantages de l'invention apparaîtront à la lecture de la description détaillée qui suit et qui est faite en référence aux dessins annexés, parmi lesquels :
- la figure 1 est un organigramme détaillé des étapes effectuées par le procédé de traitement de signal de l'invention; et
- les figures 2, 3 et 4 sont des schémas fonctionnels d'architecture de réception pour radio logicielle destinée à mettre en oeuvre le procédé de traitement de signal de l'invention.

Dans la suite de la description, on conviendra que la bande de fréquences à analyser peut contenir plusieurs signaux radio, chaque signal radio étant transmis dans un canal radio. Par ailleurs, un standard de communication ou de diffusion comprend un ensemble de canaux répondant à une spécification particulière.

Pour démoduler tous les signaux radio, quelles que soient leur largeur et leur puissance, qui sont présents dans une ou plusieurs larges bandes de fréquences, on propose selon l'invention tout d'abord d'analyser la bande de fréquences afin de déterminer le traitement en bande étroite adéquat pour démoduler les signaux radio contenus dans cette bande de fréquences, puis d'appliquer ce traitement en bande étroite.

Cette analyse peut consister à rechercher, dans la bande de fréquences de chaque standard de communication, des canaux renfermant des signaux radio utiles pour les applications d'un récepteur.

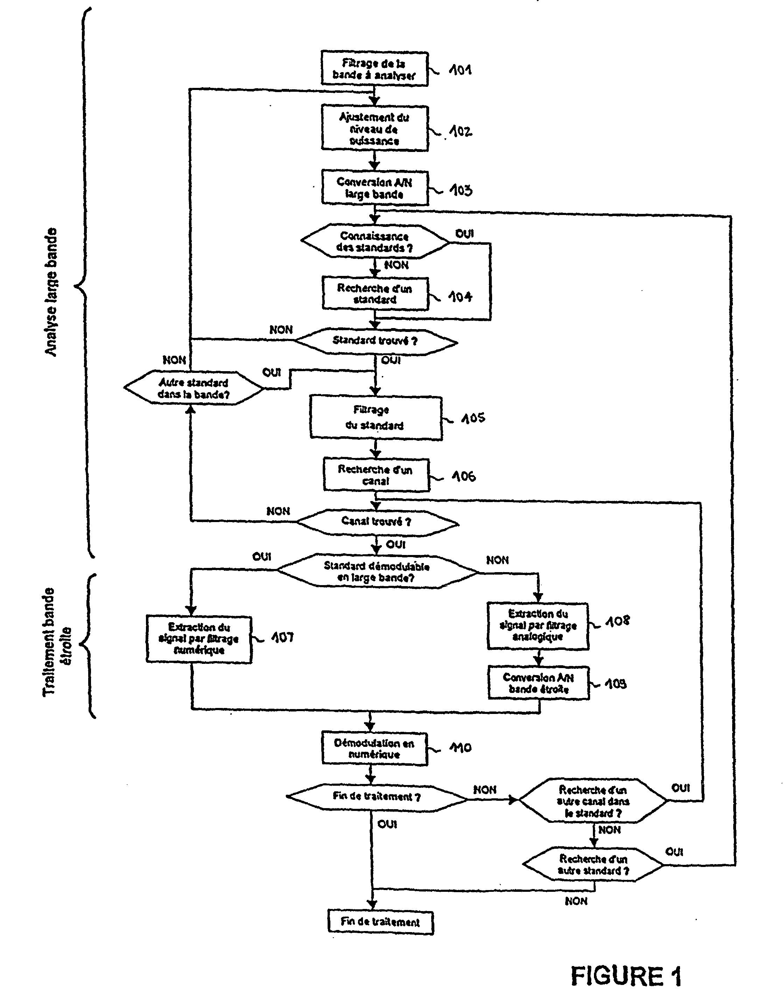

Un organigramme des étapes d'un premier mode de réalisation du procédé de l'invention est représenté à la figure 1.

Selon ce mode de réalisation, l'étape d'analyse large bande comporte tout d'abord une étape 101 de filtrage de la bande à analyser et une étape 102 d'ajustement du niveau de puissance des signaux radio reçus. Les signaux analogiques de la bande de fréquences ainsi ajustés sont ensuite convertis en signaux numériques à une étape référencée 103. Etant donnée la taille de la bande de fréquences à analyser (plusieurs dizaines de mégahertz), on prévoit un convertisseur A/N capable de travailler à une fréquence d'échantillonnage relativement élevée, de l'ordre de 250 Méch/s pour une résolution 8 bits. Les signaux ainsi numérisés sont ensuite traités par un processeur numérique. Ce processeur a pour rôle de repérer les signaux radio contenus dans la bande de fréquences filtrée. Ce repérage est effectué standard de communication par standard de communication.

Si le processeur numérique connaît les standards de communication possibles dans la bande de fréquences sélectionnée, il sélectionne à une étape référencée 105, un premier standard, sinon il recherche à une étape référencée 104 un premier standard de communication dans la bande de fréquences, par exemple à l'aide d'une transformée de Fourier (FFT) en comparant les différents paramètres (fréquence porteuse, largeur de bande, type d'accès,...) du spectre obtenu à différents gabarits de paramètres connus, et le sélectionne à l'étape 105 suivante. Cette étape de sélection de standard est effectuée par filtrage de la partie correspondante de la bande de fréquences. Puis, à une étape référencée 106, le processeur recherche dans cette partie de bande un canal transmettant un signal radio.

Si un tel canal est trouvé, la bande de fréquences analysée subit une étape de traitement en bande étroite visant à extraire le signal radio dudit canal et à le démoduler. Pour réaliser l'extraction de ce signal, il est nécessaire de savoir si la résolution du convertisseur A/N employée à l'étape 103 est suffisante pour permettre une démodulation numérique de ce signal après extraction du signal par filtrage numérique. Cette extraction par filtrage numérique après analyse de la bande est possible lorsque le standard de communication dudit signal radio extrait présente une puissance maximale de crête qui est inférieure à une valeur seuil, laquelle valeur est fonction de la résolution du convertisseur A/N. C'est par exemple le cas pour des signaux DECT ou IS95. Le procédé de l'invention fonctionne alors comme une véritable radio logicielle. L'étape d'extraction de signal par filtrage numérique est référencée 107 dans la figure 1.

Dans le cas où la résolution du convertisseur A/N est insuffisante pour effectuer directement une extraction du signal radio par filtrage numérique, on prévoit selon l'invention de réduire la taille de la bande de fréquences à traiter à la largeur du canal transportant le signal radio par filtrage analogique dudit canal (étape 108). Le signal filtré est ensuite converti (étape 109), en un signal numérique.

Les signaux numériques obtenus après filtrage numérique ou analogique sont ensuite démodulés par un processeur numérique à une étape 110.

Bien entendu, si on ne trouve pas de signal dans le premier standard analysé, on effectue des recherches de signaux dans les autres standards possibles de la bande de fréquences.

Après la démodulation d'un premier signal, on peut en outre prévoir de démoduler d'autres signaux dans le même standard ou des signaux dans d'autres standards.

A noter que, lorsque la taille de bande de fréquences à analyser est supérieure à environ 100 MHz, l'analyse de la bande de fréquences est effectuée par tranches de 100 MHz par exemple pour que la sensibilité du convertisseur soit suffisante pour permettre une analyse efficace de la bande de fréquences dans le processeur numérique.

Dans un second mode de réalisation non représenté, les étapes 104 à 106 sont remplacées par une étape de recherche plus globale visant à rechercher, dans la bande de fréquences sélectionnée, des informations sur le standard de communication des signaux radio contenus dans cette bande. On effectue, par exemple, une recherche de fréquence porteuse et/ou de largeur de bande desdits signaux radio de la bande de fréquences. On compare ensuite les informations collectées avec les paramètres connus des standards de communication de manière à identifier le standard de communication des signaux radio de la bande de fréquences analysée. Le ou les standards de communication des signaux radio de la bande de fréquences étant identifiés, il est alors possible de déterminer le traitement bande étroite à appliquer aux signaux pour les démoduler.

On peut également rechercher d'autres paramètres caractérisant des signaux radio de la bande de fréquences, par exemple leur fréquence rythme ou. le type de modulation employé. Ces paramètres serviront alors au processeur pour la démodulation proprement dite des signaux radio.

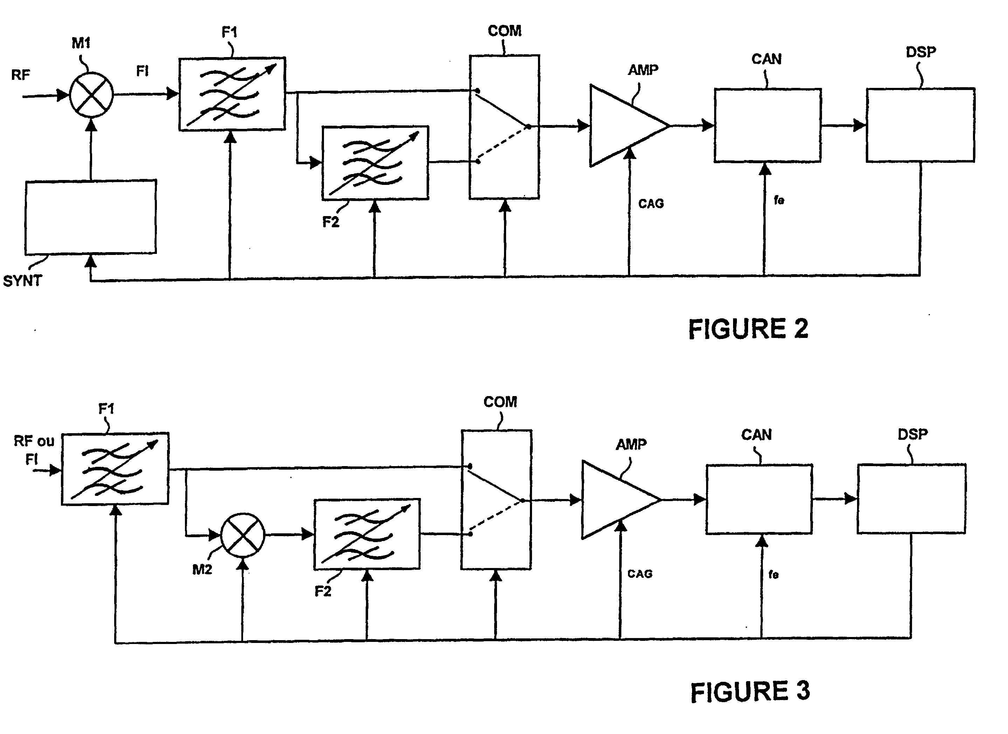

Pour la mise en oeuvre de ces modes de réalisation du procédé de l'invention, on propose selon l'invention plusieurs architectures possibles représentés aux figures 2 à 4.

Les signaux radiofréquence reçus à l'entrée du dispositif sont référencés RF. Dans une première forme de réalisation illustrée à la figure 2, les signaux RF sont transposés à une fréquence intermédiaire FI au moyen d'un mélangeur M1 et d'un synthétiseur S. A noter que les signaux RF sont filtrés et amplifiés (non représenté) préalablement pour adapter leur niveau de puissance.

Les signaux ainsi transposés sont ensuite filtrés par un bloc de filtrage de type passe-bande, F1, destiné à ne laisser passer que la bande de fréquences à analyser. La bande passante de ce bloc de filtrage est avantageusement réglable en taille et en position pour permettre une analyse de la bande globale tranche par tranche ou standard par standard. En pratique, la taille maximale de la bande passante du filtre F1 est actuellement limitée à environ 100 MHz pour tenir compte des caractéristiques des convertisseurs A/N.

Le niveau de puissance des signaux radio de la bande ainsi filtrée est ensuite ajusté par un amplificateur à commande automatique de gain AMP. Les signaux obtenus sont convertis numériquement par un convertisseur analogique/numérique CAN puis traités par un processeur de traitement numérique DSP. Ce processeur est chargé d'effectuer les recherches de standard et de canal dans la bande de fréquences ainsi numérisée ou d'effectuer la recherche des paramètres des signaux radio contenus dans ladite bande de fréquences.

Si le canal repéré par le processeur lors de l'analyse contient des signaux à faible dynamique (par ex. signaux DECT ou IS95), l'extraction du signal du canal repéré est effectuée dans le processeur DSP par filtrage numérique. Les signaux de ce canal peuvent être ensuite démodulés par ce même processeur ou un autre. Plus précisément, le filtrage numérique est mis en oeuvre lorsque le ou les standard(s) de communication des signaux radio contenus dans la bande de fréquences présente(nt) une puissance maximale de crête qui est inférieure à une valeur seuil, laquelle valeur est fonction de la résolution du convertisseur Analogique/Numérique CAN.

Dans le cas contraire, l'extraction du signal du canal est effectuée par filtrage analogique au moyen d'un bloc de filtrage F2 monté en cascade avec le bloc de filtrage F1. Le bloc F2 est soit un filtre programmable, soit un banc de filtres.

Les signaux issus du bloc de filtrage F2 sont ensuite acheminés à l'entrée de l'amplificateur AMP par l'intermédiaire d'un commutateur COM. Les signaux du canal sélectionné sont alors amplifiés par l'amplificateur AMP, puis convertis par le convertisseur CAN et démodulés par le processeur DSP.

A noter que le processeur DSP règle la fréquence d'échantillonnage fe du convertisseur CAN et la commande automatique de gain de l'amplificateur AMP pour l'analyse large bande et les modifie si nécessaire pour le traitement bande étroite. Il commande également le synthétiseur et le réglage en taille et en position de la bande passante des blocs de filtrage F1 et F2.

Dans la forme de réalisation illustrée figure 2, la démodulation des signaux est effectuée à la fréquence intermédiaire FI. Pour effectuer une démodulation en bande de base ou à une fréquence intermédiaire plus basse, on peut prévoir un second mélangeur M2 entre les blocs de filtrage F1 et F2. Cette forme de réalisation en variante est représentée à la figure 3.

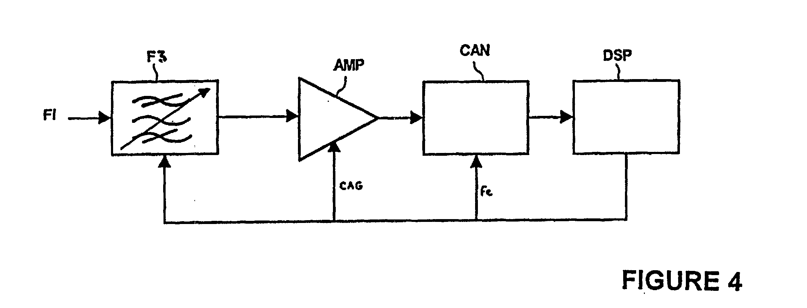

Une architecture plus générique est proposée à la figure 4. Dans cette architecture, les blocs de filtrage F1 et F2 sont regroupés en un bloc de filtrage unique F3 dont la bande passante est réglable en taille et en position par le processeur DSP.

## Revendications

1. Procédé de traitement des signaux radio d'une pluralité de standards de radiocommunication occupant une large bande de fréquences **caractérisé en ce qu'**il comporte les étapes suivantes :
- une étape d'analyse large bande (101-106) pour acquérir des informations sur les signaux radio contenus dans ladite large bande de fréquences et sélectionner un traitement en bande étroite approprié pour la démodulation desdits signaux radio, et
- une étape de traitement en bande étroite (107-110) desdits signaux radio contenus dans ladite large bande de fréquences pour les démoduler.

2. Procédé selon la revendication 1, **caractérisé en ce que** l'étape d'analyse large bande consiste à rechercher, parmi les canaux des standards de radiocommunication, les canaux renfermant des signaux radio susceptibles d'être démodulés à ladite étape de traitement en bande étroite.

3. Procédé selon la revendication 1, **caractérisé en ce que** l'étape d'analyse large bande (101-106) consiste à acquérir des informations permettant d'identifier le standard de radiocommunication associé à chacun desdits signaux radio contenus dans ladite large bande de fréquences.

4. Procédé selon la revendication 3, **caractérisé en ce que** l'étape d'analyse large bande consiste à rechercher la fréquence porteuse et/ou la largeur de bande des signaux radio contenus dans ladite large bande de fréquences.

5. Procédé selon la revendication 3 ou 4, **caractérisé en ce que** l'étape d'analyse large bande consiste à rechercher en outre la fréquence rythme et/ou le type de modulation des signaux radio contenus dans ladite large bande de fréquences.

6. Procédé selon l'une des revendications 3 à 5, **caractérisé en ce que** l'étape d'analyse large bande comporte une étape de conversion analogique/numérique (103) des signaux radio de ladite large bande de fréquences et une étape de traitement numérique (104-106) des signaux numériques résultant pour obtenir lesdites informations sur le standard de radiocommunication desdits signaux radio.

7. Procédé selon l'une des revendications 1 à 6, **caractérisé en ce que**, pour chaque signal radio contenu dans ladite large bande de fréquences, l'étape de traitement en bande étroite comporte une étape d'extraction (107;108) dudit signal radio et une étape de démodulation (110) dudit signal radio extrait.

8. Procédé selon la revendication 7, **caractérisé en ce que** l'étape d'extraction dudit signal radio est réalisée par filtrage analogique (108) de la large bande de fréquences lorsque le standard de radiocommunication dudit signal radio présente une puissance maximale de crête qui est supérieure à une valeur seuil.

9. Procédé selon la revendication 7 ou 8, **caractérisé en ce que** l'étape d'extraction dudit signal radio est réalisée par filtrage numérique (107) des signaux radio analysés lorsque le standard de radiocommunication dudit signal radio présente une puissance maximale de crête qui est inférieure à une valeur seuil.

10. Procédé selon la revendication 8 ou 9, **caractérisé en ce que** ladite valeur seuil est fonction de la résolution des signaux numériques à l'issue de l'étape de conversion analogique/numérique (103) de ladite étape d'analyse large bande.

11. Procédé selon l'une des revendications 1 à 10, **caractérisé en ce que** la large bande de fréquences est analysée par tranche de plusieurs dizaines de mégahertz.

12. Procédé selon l'une des revendications 1 à 10, **caractérisé en ce que** la large bande de fréquences est analysée standard par standard.

13. Récepteur de radio logicielle apte à traiter les signaux radio d'une pluralité de standards de radiocommunication occupant une large bande de fréquences, **caractérisé en ce qu'**il comporte :
- des moyens d'analyse large bande pour acquérir des informations sur les signaux radio contenus dans ladite large bande de fréquences et sélectionner un traitement en bande étroite des desdits signaux radio en fonction des informations acquises par lesdits moyens d'analyse large bande, et
- des moyens de traitement en bande étroite pour démoduler lesdits signaux radio contenus dans ladite large bande de fréquences.

14. Récepteur selon la revendication 13, **caractérisé en ce que** les moyens d'analyse large bande effectuent une recherche, parmi les canaux des standards de radiocommunication, des canaux renfermant des signaux radio.

15. Récepteur selon la revendication 13, **caractérisé en ce que** les moyens d'analyse large bande effectuent une recherche d'informations permettant d'identifier le standard de radiocommunication associé à chacun desdits signaux radio contenus dans ladite large bande de fréquences.

16. Récepteur selon la revendication 15, **caractérisé en ce que** les moyens d'analyse large bande recherchent la fréquence porteuse et/ou la largeur de bande des signaux radio contenus dans ladite large bande de fréquences.

17. Récepteur selon la revendication 15 ou 16, **caractérisé en ce que** les moyens d'analyse large bande recherchent en outre la fréquence rythme et/ou le type de modulation des signaux radio contenus dans ladite large bande de fréquences.

18. Récepteur selon l'une des revendications 13 à 17, **caractérisé en ce que** les moyens de traitement en bande étroite comportent des moyens d'extraction des signaux radio contenus dans ladite large bande de fréquences et des moyens de démodulation desdits signaux extraits.

19. Récepteur selon l'une des revendications 13 à 18, **caractérisé en ce que** les moyens d'analyse large bande comportent un premier bloc de filtrage (F1) dont la bande passante correspond à une bande de fréquences à analyser, un premier amplificateur (AMP) pour ajuster le niveau de puissance des signaux présents dans ladite bande de fréquences à analyser, un premier convertisseur analogique/numérique (CAN) pour convertir lesdits signaux ajustés en puissance, et un premier processeur de traitement numérique (DSP) pour analyser les signaux numériques résultant et en déduire le standard de radiocommunication desdits signaux analysés.

20. Récepteur selon la revendication 18, **caractérisé en ce que** la bande passante dudit premier bloc de filtrage (F1) est réglable en position et en taille.

21. Récepteur selon l'une des revendications 13 à 20, **caractérisé en ce que** les moyens de traitement bande étroite comportent un second processeur numérique chargé d'effectuer une extraction des signaux radio par filtrage numérique et une démodulation numérique desdits signaux extraits.

22. Récepteur selon la revendication 21, **caractérisé en ce que** les premier et second processeurs numériques correspondent à un même processeur numérique (DSP).

23. Récepteur selon l'une des revendications 13 à 20, **caractérisée en ce que** les moyens de traitement en bande étroite comportent un second bloc de filtrage (F2) dont la bande passante est réglée en fonction de la taille et de la position du canal à sélectionner, un second amplificateur (AMP) pour ajuster le niveau de puissance des signaux radio à démoduler, un second convertisseur analogique/numérique (CAN) et un second processeur de traitement numérique (DSP) pour effectuer la démodulation desdits signaux numériques résultants.

24. Récepteur selon la revendication 23, **caractérisé en ce que** les premier et second blocs de filtrage (F1,F2), les premier et second amplificateurs, les premier et second convertisseurs analogique/numérique et les premier et second processeurs de traitement numérique sont respectivement physiquement un même bloc de filtrage (F3), un même amplificateur (AMP), un même convertisseur analogique/numérique (CAN) et un même processeur de traitement numérique (DSP).

25. Récepteur selon l'une des revendications 19 à 24, **caractérisé en ce qu'**elle comporte en outre, en amont des moyens d'analyse large bande et des moyens de traitement bande étroite, un dispositif de transposition en fréquence (M1) pour transposer les signaux radio à une fréquence intermédiaire.

26. Récepteur selon l'une des revendications 19 à 25, **caractérisé en ce que** les moyens de traitement bande étroite comportent en outre un dispositif de transposition en fréquence (M2) pour transposer en bande de base ou à une fréquence intermédiaire très basse les signaux à démoduler en bande étroite.

## Patentansprüche

1. Verfahren zur Verarbeitung von Funksignalen von mehreren Funkkommunikationsstandards, die ein breites Frequenzband abdecken, **dadurch gekennzeichnet, daß** es die folgenden Schritte aufweist:
- einen Breitbandanalyseschritt (101-106), in dem Informationen über die Funksignale aufgenommen werden, die in dem breiten Frequenzband enthalten sind, und Auswählen einer Schmalbandverarbeitung, die für die Demodulation dieser Funksignale geeignet ist, und
- einen Schmalbandverarbeitungsschritt (107-110) dieser Funksignale, die in dem breiten Frequenzband enthalten sind, um sie zu demodulieren.

2. Verfahren nach Anspruch 1, **dadurch gekennzeichnet, daß** der Breitbandanalyseschritt darin besteht, aus den Kanälen der Funkkommunikationsstandards diese Kanäle zu suchen, die die Funksignale einschließen, die bei dem Schmalbandverarbeitungsschritt demoduliert werden können.

3. Verfahren nach Anspruch 1, **dadurch gekennzeichnet, daß** der Breitbandanalyseschritt (101-106) darin besteht, Informationen einzuholen, die es ermöglichen, den Funkkommunikationsstandard zu identifizieren, der mit jedem der Funksignale verbunden ist, die in dem breiten Frequenzband enthalten sind.

4. Verfahren nach Anspruch 3, **dadurch gekennzeichnet, daß** der Breitbandanalyseschritt darin besteht, die Trägerfrequenz und/oder die Bandbreite der Funksignale, die in dem breiten Frequenzband enthalten sind, zu suchen.

5. Verfahren nach einem der Ansprüche 3 oder 4, **dadurch gekennzeichnet, daß** der Breitbandanalyseschritt darin besteht, darüber hinaus den Frequenzrhythmus und/oder die Modulationsart der Funksignale zu suchen, die in dem breiten Frequenzband enthalten sind.

6. Verfahren nach einem der Ansprüche 3 bis 5, **dadurch gekennzeichnet, daß** der Breitbandanalyseschritt einen Schritt für die Analog-/Digitalumwandlung (103) der Funksignale des breiten Frequenzbandes enthält und einen Schritt der digitalen Verarbeitung (104-106) der sich ergebenden digitalen Signale, um die Informationen über den Funkkommunikationsstandard dieser Funksignale zu erhalten.

7. Verfahren nach einem der Ansprüche 1 bis 6, **dadurch gekennzeichnet, daß** für jedes Funksignal, das in dem breiten Frequenzband enthalten ist, der Schmalbandverarbeitungsschritt einen Extraktionsschritt (107; 108) des Funksignals und einen Demodulationsschritt des extrahierten Funksignals aufweist.

8. Verfahren nach Anspruch 7, **dadurch gekennzeichnet, daß** der Schritt für die Extraktion des Funksignals durch eine analoge Filterung (108) des breiten Frequenzbandes erfolgt, wenn der Funkkommunikationsstandard dieses Funksignals eine maximale Spitzenleistung aufweist, die größer als ein Grenzwert ist.

9. Verfahren nach Anspruch 7 oder 8, **dadurch gekennzeichnet, daß** der Schritt für die Extraktion des Funksignals durch digitale Filterung (107) der analysierten Funksignale erfolgt, wenn der Funkkommunikationsstandard des Funksignals eine maximale Spitzenleistung darstellt, die geringer als ein Grenzwert ist.

10. Verfahren nach Anspruch 8 oder 9, **dadurch gekennzeichnet, daß** der Grenzwert von der Auflösung der digitalen Signale am Ausgang des Schrittes der Analog-/Digitalumwandlung (103) des Breitbandanalyseschrittes abhängt.

11. Verfahren nach einem der Ansprüche 1 bis 10, **dadurch gekennzeichnet, daß** das breite Frequenzband in Schnitten von mehreren 10 kHz analysiert wird.

12. Verfahren nach einem der Ansprüche 1 bis 10, **dadurch gekennzeichnet, daß** das breite Frequenzband Standard für Standard analysiert wird.

13. Software-Funkempfänger, der Funksignale von einer Vielzahl von Funkkommunikationsstandards verarbeiten kann, die ein breites Frequenzband besetzen, **dadurch gekennzeichnet, daß** er aufweist:
- Breitbandanalyseeinrichtungen, die Informationen über die in dem breiten Frequenzband enthaltenen Funksignale aufnehmen und eine Schmalbandverarbeitung dieser Funksignale in Abhängigkeit von den durch die Breitbandanalyseeinrichtungen erhaltenen Informationen auswählen, und
- Schmalbandverarbeitungseinrichtungen, die die Funksignale, die in dem breiten Frequenzband enthaltenen sind, demodulieren.

14. Empfänger nach Anspruch 13, **dadurch gekennzeichnet, daß** die Breitbandanalyseeinrichtungen in den Kanälen der Funkkommunikationsstandards die Kanäle aussuchen, die die Funksignale einschließen.

15. Empfänger nach Anspruch 13, **dadurch gekennzeichnet, daß** die Breitbandanalyseeinrichtungen Informationen suchen, die die Identifizierung des Funkkommunikationsstandards ermöglichen, der mit jedem dieser in dem breiten Frequenzband enthaltenen Funksignale verbunden ist.

16. Empfänger nach Anspruch 15, **dadurch gekennzeichnet, daß** die Breitbandanalyseeinrichtungen die Trägerfrequenz und/oder die Bandbreite der in dem breiten Frequenzband enthaltenen Funksignale suchen.

17. Empfänger nach Anspruch 15 oder 16, **dadurch gekennzeichnet, daß** die Breitbandanalyseeinrichtungen weiterhin die Rhythmusfrequenz und/oder die Modulationsart der in dem breiten Frequenzband enthaltenen Funksignale suchen.

18. Empfänger nach einem der Ansprüche 13 bis 17, **dadurch gekennzeichnet, daß** die Schmalbandverarbeitungseinrichtungen Einrichtungen für die Extraktion der Funksignale aufweisen, die in dem breiten Frequenzband enthalten sind, sowie Einrichtungen für die Demodulation dieser extrahierten Signale.

19. Empfänger nach einem der Ansprüche 13 bis 18, **dadurch gekennzeichnet, daß** die Breitbandanalyseeinrichtungen einen ersten Filterblock (F1) aufweisen, dessen Frequenzgang einem zu untersuchenden Frequenzband entspricht, einen ersten Verstärker (AMP), der das Leistungsniveau der in diesem zu untersuchenden Frequenzband vorliegenden Signale anpaßt, ein erster Analog-/Digitalkonverter (CAN), der die in der Leistung angepaßten Signale umwandelt, sowie einen ersten digitalen Verarbeitungsprozessor (DSP), der die sich ergebenden digitalen Signale analysiert und daraus den Funkkommunikationsstandard der analysierten Signale folgert.

20. Empfänger nach Anspruch 18, **dadurch gekennzeichnet, daß** der Frequenzgang des ersten Filterblocks (F1) in der Position und der Größe einstellbar ist.

21. Empfänger nach einem der Ansprüche 13 bis 20, **dadurch gekennzeichnet, daß** die Schmalbandverarbeitungseinrichtungen einen zweiten digitalen Prozessor aufweisen, der die Aufgabe hat, Funksignale durch eine digitale Filterung zu extrahieren und eine Demodulation dieser extrahierten Signale auszuführen.

22. Empfänger nach Anspruch 21, **dadurch gekennzeichnet, daß** die ersten und zweiten Digitalprozessoren einem gleichen digitalen Prozessor (DSP) entsprechen.

23. Empfänger nach einem der Ansprüche 13 bis 20, **dadurch gekennzeichnet, daß** die Schmalbandverarbeitungseinrichtungen einen zweiten Filterblock (F2), dessen Frequenzgang in Abhängigkeit von der Größe und der Position des auszuwählenden Kanals eingestellt ist, einen zweiten Verstärker (AMP), der das Leistungsniveau der zu demodulierenden Funksignale anpaßt, einen zweiten Analog-/Digitalwandler (CAN) und einen zweiten digitalen Verarbeitungsprozessor (DSP) aufweisen, der die Demodulation der sich ergebenden digitalen Signale ausführt.

24. Empfänger nach Anspruch 23, **dadurch gekennzeichnet, daß** der erste und zweite Filterblock (F1, F2), der erste und zweite Verstärker, der erste und zweite Analog-/Digitalwandler und der erste und zweite digitale Verarbeitungsprozessor jeweils physisch ein einziger Filterblock (F3), ein einziger Verstärker (AMP), ein einziger Analog-/Digitalwandler (CAN) und ein einziger digitaler Verarbeitungsprozessor (DSP) sind.

25. Empfänger nach einem der Ansprüche 19 bis 24, **dadurch gekennzeichnet, daß** er darüber hinaus vor den Breitbandanalyseeinrichtungen und den Schmalbandanalyseeinrichtungen eine Vorrichtung für die Frequenztransponierung (M1) aufweist, der die Funksignale in eine Zwischenfrequenz transponiert.

26. Empfänger nach einem der Ansprüche 19 bis 25, **dadurch gekennzeichnet, daß** die Schmalbandverarbeitungseinrichtungen darüber hinaus eine Vorrichtung für die Frequenztransponierung (M2) aufweisen, die als Basisband oder bei einer sehr niedrigen Zwischenfrequenz die im schmalen Band zu demodulierenden Signale transponiert.

## Claims

1. Method of processing radio signals of a number of radio-communications standards occupying a wide band of frequencies, **characterized in that** it includes the following stages:
- a stage of wide-band analysis (101-106) in order to acquire information on the radio signals contained in the said wide band of frequencies and to select an appropriate narrow-band processing for demodulation of the said radio signals, and
- a stage of narrow-band processing (107-110) of the said radio signals contained in the said wide band of frequencies in order to demodulate them.

2. Method according to Claim 1, **characterized in that** the wide-band analysis stage consists in searching, among the channels of the radio-communications standards, for the channels enclosing radio signals capable of being demodulated at the said narrow-band processing stage.

3. Method according to Claim 1, **characterized in that** the wide-band analysis stage (101-106) consists in acquiring information making it possible to identify the radio-communications standards associated with each of the said radio signals contained in the said wide band of frequencies.

4. Method according to Claim 3, **characterized in that** the wide-band analysis stage consists in searching for the carrier frequency and/or the bandwidth of the radio signals contained in the said wide band of frequencies.

5. Method according to Claim 3 or 4, **characterized in that** the wide-band analysis stage consists in searching furthermore for the rhythm frequency and/or the type of modulation of the radio signals contained in the said wide band of frequencies.

6. Method according to one of Claims 3 to 5, **characterized in that** the wide-band analysis stage includes a stage of analog/digital conversion (103) of the radio signals of the said wide band of frequencies, and a stage of digital processing (104-106) of the resulting digital signals in order to obtain the said information on the radio-communications standard of the said radio signals.

7. Method according to one of Claims 1 to 6, **characterized in that**, for each radio signal contained in the said wide band of frequencies, the narrow-band processing stage includes a stage of extraction (107; 108) of the said radio signal and a stage of demodulation (110) of the said extracted radio signal.

8. Method according to Claim 7, **characterized in that** the stage of extraction of the said radio signal is performed by analog filtering (108) of the wide band of frequencies when the radio-communications standard of the said radio signal exhibits a maximum peak power which is higher than a threshold value.

9. Method according to Claim 7 or 8, **characterized in that** the stage of extraction of the said radio signal is performed by digital filtering (107) of the radio signals analysed when the radio-communications standard of the said radio signal exhibits a maximum peak power which is below a threshold value.

10. Method according to Claim 8 or 9, **characterized in that** the said threshold value is a function of the resolution of the digital signals on conclusion of the stage of analog/digital conversion (103) of the said wide-band analysis stage.

11. Method according to one of Claims 1 to 10, **characterized in that** the wide band of frequencies is analysed in tranches of several tens of Megahertz.

12. Method according to one of Claims 1 to 10, **characterized in that** the wide band of frequencies is analysed standard by standard.

13. Software radio receiver able to process the radio signals of a number of radio-communications standards occupying a wide band of frequencies, **characterized in that** it includes:
- wide-band analysis means for acquiring information on the radio signals contained in the said wide band of frequencies and for selecting a narrow-band processing of the said radio signals on the basis of the information acquired by the said wide-band analysis means, and
- narrow-band processing means for demodulating the said radio signals contained in the said wide band of frequencies.

14. Receiver according to Claim 13, **characterized in that** the wide-band analysis means perform a search, among the channels of the radio-communications standards, for the channels enclosing radio signals.

15. Receiver according to Claim 13, **characterized in that** the wide-band analysis means perform a search for information making it possible to identify the radio-communications standards associated with each of the said radio signals contained in the said wide band of frequencies.

16. Receiver according to Claim 15, **characterized in that** the wide-band analysis means search for the carrier frequency and/or the bandwidth of the radio signals contained in the said wide band of frequencies.

17. Receiver according to Claim 15 or 16, **characterized in that** the wide-band analysis means furthermore search for the rhythm frequency and/or the type of modulation of the radio signals contained in the said wide band of frequencies.

18. Receiver according to one of Claims 13 to 17, **characterized in that** the narrow-band processing means include means for extracting the radio signals contained in the said wide band of frequencies, and means for demodulating the said extracted signals.

19. Receiver according to one of Claims 13 to 18, **characterized in that** the wide-band analysis means include a first filtering unit (F1) the passband of which corresponds to a band of frequencies to be analysed, a first amplifier (AMP) for adjusting the power level of the signals present in the said band of frequencies to be analysed, a first analog/digital converter (CAN) for converting the said power-adjusted signals, and a first digital signal processor (DSP) for analysing the resultant digital signals and deducing therefrom the radio-communications standard of the said analysed signals.

20. Receiver according to Claim 18, **characterized in that** the passband of the said first filtering unit (F1) is adjustable in position and in size.

21. Receiver according to one of Claims 13 to 20, **characterized in that** the narrow-band processing means include a second digital processor tasked with performing an extraction of the radio signals by digital filtering and a digital demodulation of the said extracted signals.

22. Receiver according to Claim 21, **characterized in that** the first and second digital processors correspond to the same digital processor (DSP).

23. Receiver according to one of Claims 13 to 20, **characterized in that** the narrow-band processing means include a second filtering unit (F2) the passband of which is adjusted as a function of the size and of the position of the channel to be selected, a second amplifier (AMP) for adjusting the power level of the radio signals to be demodulated, a second analog/digital converter (CAN) and a second digital processor (DSP) for performing the demodulation of the said resultant digital signals.

24. Receiver according to Claim 23, **characterized in that** the first and second filtering units (F1, F2), the first and second amplifiers, the first and second analog/digital converters and the first and second digital signal processors are physically the same filtering unit (F3), the same amplifier (AMP), the same analog/digital converter (CAN) and the same digital signal processor (DSP) respectively.

25. Receiver according to one of Claims 19 to 24, **characterized in that** it further includes, upstream of the wide-band analysis means and of the narrow-band processing means, a frequency-transposition device (M1) for transposing the radio signals to an intermediate frequency.

26. Receiver according to one of Claims 19 to 25, **characterized in that** the narrow-band processing means further include a frequency-transposition device (M2) for transposing the signals to be demodulated in narrow band mode to baseband or to a very low intermediate frequency.
